# EUROPÄISCHE PATENTANMELDUNG

(11) **EP 2 648 055 A1**
(43) Veröffentlichungstag der Anmeldung: **09.10.2013**
(21) Anmeldenummer: 12163005.7
(22) Anmeldetag: 03.04.2012
(51) Int. Cl.: G05B 19/042

(54) **Rohrpoststation mit einem Bedienterminal**

(71) Anmelder: Ing. Sumetzberger GmbH, 1110 Wien (AT)
(72) Erfinder: Friedrich, Peter, 1040 Wien (AT)
(74) Vertreter: Müllner, Martin

(57) **Zusammenfassung**

Eine Rohrpoststation hat ein Bedienterminal zur Eingabe und Ausgabe von Daten, wobei das Bedienterminal einen Touchscreen mit Bildschirmtastatur aufweist. Erfindungsgemäß kann die Funktion zumindest einiger Tasten (16') durch eine Eingabe am Bedienterminal geändert werden, vorzugsweise wird durch Drücken der entsprechenden Taste (16') länger als eine vorgegebene Mindestzeit die Taste (16') mit dem Ziel programmiert, das gerade in einem Bereich (16) der Anzeige angezeigt wird. Vorzugsweise sind am Bedienterminal auch die Historie und/oder die anstehenden Sendungen anzeigbar. Zweckmäßigerweise ist eine Identifizierungsvorrichtung für den Benutzer vorgesehen und kann die Funktion nur dann geändert werden, wenn der identifizierte Benutzer die entsprechende Berechtigung hat.

## Beschreibung

### Technisches Gebiet

Die vorliegende Erfindung betrifft eine Rohrpoststation mit einem Bedienterminal zur Eingabe und Ausgabe von Daten, wobei das Bedienterminal einen Touchscreen mit Bildschirmtastatur aufweist.

### Stand der Technik

Rohrpoststationen werden seit Jahrzehnten auf diese Art gebaut. Die Ausgabe der Daten erfolgt meist über ein LCD-Display. Früher waren die Tasten hardwaremäßig, zum Beispiel als Teil einer Folientastatur, vorhanden; durch den Fortschritt der Touchscreen-Bildschirme können die Tasten heute natürlich auch softwaremäßig auf einem Touchscreen realisiert werden. Dies bezeichnet man als Bildschirmtastatur.

In der Praxis hat sich gezeigt, dass Rohrposthülsen, die von einer bestimmten Station weggeschickt werden, meistens zu einer bestimmten Station oder zu einigen wenigen verschiedenen Stationen gesendet werden. Es ist daher auch schon bekannt, spezielle Tasten vorzusehen, die einer bestimmten Zielstation zugeordnet sind. Will man eine Rohrposthülse zu dieser Zielstation senden, genügt es also, diese eine Taste zu drücken. Es ist nicht notwendig, die Bezeichnung dieser Station einzugeben oder aus einer Liste auszuwählen.

Nachteilig bei diesen bekannten Lösungen ist, dass sie nicht flexibel sind. Wenn die Tasten anders belegt werden sollen, ist es notwendig, die Auswertung der Tasten im Zentralrechner zu ändern. Die Bedienungsperson muss also einen entsprechenden Antrag stellen, und wenn dieser vom Systemadministrator am Zentralrechner durchgeführt wird, muss auch die Beschriftung der Folientastatur entsprechend geändert werden.

Weiters ist bekannt, Stationen wie gehabt mit einer Steuerplatine auszustatten, welche über Industriebus mit der Zentrale kommuniziert, und zusätzlich einen kompletten Industrie PC mit Touchscreen zusätzlich an oder neben der Station zu montieren. Diese PCs verfügen über eine Ethernet-Verbindung zur Rohrpostzentrale. D.h. die Kommunikation erfolgt nach Eingabe des Users am Touchscreen über Ethernet mit der Zentrale, und anschließend werden die entsprechenden Befehlspakete über Industriebus von der Zentrale an die Steuerplatine der Station weitergegeben. Bei diesen Lösungen wird außerdem noch eine kleine Box zur RFID-Erkennung von Usern mit Smartcard zusätzlich an die Station oder an den PC montiert.

Nachteilig ist dabei, dass zusätzliche externe Module an oder neben der Station montiert werden müssen und dass zwei Kommunikationsleitungen erforderlich sind.

### Kurzbeschreibung der Erfindung

Es ist Aufgabe der vorliegenden Erfindung, diese Nachteile zu beseitigen. Diese Aufgabe wird durch eine Rohrpoststation der eingangs genannten Art erfindungsgemäß dadurch gelöst, dass die Funktion zumindest einiger Tasten durch eine Eingabe am Bedienterminal geändert werden kann.

Die Idee der vorliegenden Erfindung besteht darin, eine Funktion, die bisher nur im Zentralrechner vom Systemadministrator durchgeführt werden konnte, der Bedienungsperson zur Verfügung zu stellen. Da es sich gemäß der vorliegenden Erfindung um eine Bildschirmtastatur handelt, ist auch die Änderung der Beschriftung kein Problem; diese kann softwaremäßig und automatisch vorgenommen werden.

Die vorliegende Erfindung kann in einfacher Weise dadurch realisiert werden, dass die Funktion zumindest einiger Tasten dadurch geändert werden kann, dass die entsprechende Taste länger als eine vorgegebene Mindestzeit gedrückt wird. Dadurch ergeben sich zwei Vorteile: erstens ist keine zusätzliche Taste "Programmiermodus" notwendig, wodurch Platz am Touchscreen gespart wird; zweitens ist dadurch die Programmierfunktion versteckt, so dass ein nicht eingeschulter Benutzer nicht in Versuchung kommt, mit dem Programmiermodus zu spielen und dadurch die Tastenbelegung unabsichtlich zu zerstören.

Es ist zweckmäßig, wenn die entsprechende Taste mit dem Ziel programmiert wird, das gerade in der Anzeige angezeigt wird. Bei Bedienterminals für Rohrpoststationen ist normalerweise ein Stationsverzeichnis vorhanden; wenn eine Rohrposthülse weggeschickt werden soll, dann wird die entsprechende Station aus diesem Stationsverzeichnis ausgewählt. Erfindungsgemäß bekommt dieses Stationsverzeichnis nun eine zweite Funktion, nämlich zum Programmieren der Funktionstasten. Ein besonderer Vorteil davon ist, dass diese Art der Programmierung vollkommen unabhängig vom verwendeten Zeichensatz ist. Sie funktioniert mit japanischen oder chinesischen Schriftzeichen genauso wie mit dem lateinischen Alphabet.

Von besonderem Vorteil ist, wenn am Bedienterminal die Historie und/oder die anstehenden Sendungen anzeigbar sind. Dies ist nicht nur eine wertvolle Information für die Bedienungsperson, sondern es vereinfacht auch die Programmierung der Funktionstasten. In diesem Fall muss nämlich die gewünschte Station nicht aus dem - bei manchen Rohrpostanlagen recht umfangreichen - Stationsverzeichnis herausgesucht werden, sondern aus dem wesentlich kürzeren Verzeichnis der Absender, die kürzlich eine Sendung an die betreffende Station beauftragt haben.

Weiters ist es zweckmäßig, wenn die Rohrpoststation eine Identifizierungsvorrichtung für den Benutzer aufweist und die Funktion nur dann geändert wird, wenn der identifizierte Benutzer die entsprechende Berechtigung hat. Auf diese Weise wird verhindert, dass eine nicht eingeschulte Person versehentlich die Tastenbelegung verändert. Diese Identifizierungsvorrichtung - vorzugsweise in RFID-Technik - kann natürlich auch in bekannter Weise dazu verwendet werden, dass die gesamte Bedienung der Station nur durch berechtigte Personen möglich ist. Jeder Person sind dann zwei Berechtigungen zugeteilt: "Bedienung der Station" und "Programmierung der Tasten".

Es ist günstig, wenn eine Platine vorgesehen ist, auf der sowohl die übliche Steuerung für die Rohrpoststation als auch die Ansteuerung des Bedienterminals als auch die Identifizierungsvorrichtung für den Benutzer untergebracht sind. Auf diese Weise sind keine Bauteile außerhalb der Station notwendig (wie zum Beispiel ein RFID- Empfänger). Die Steuerplatine für die Rohrpoststation übernimmt einerseits die üblichen Steuerungsfunktionen der Station und zusätzlich die Steuerung des Touchscreens und der zusätzlichen Intelligenz der neuen Touchfunktionen. In diese Platine ist ebenso die RFID Antenne zur User-Identifizierung integriert. Somit sind keine zusätzlichen Module an der Station notwendig und eine kompakte geschlossene Bauweise der Station wird ermöglicht.

Nach einem weiteren Merkmal der vorliegenden Erfindung ist vorgesehen, dass die Hintergrundfarbe der Anzeige vom Zustand der Rohrpoststation oder der Rohrpostanlage abhängig ist. Bei herkömmlichen Rohrpoststationen sind (zumindest) zwei Leuchtdioden vorgesehen: Grün für "Station frei", Rot für "Station besetzt". Abgesehen davon, dass das Vorsehen von Leuchtdioden ein zusätzlicher Aufwand ist, sind diese Leuchtdioden nicht deutlich wahrnehmbar. Gemäß dem letzten Merkmal der Erfindung ist daher vorgesehen, die Hintergrundfarbe des Touchscreens entsprechend zu ändern; dies ist wesentlich auffälliger und dennoch ohne zusätzlichen technischen Hardwareaufwand zu realisieren. Kurze Beschreibung der Zeichnungsfiguren

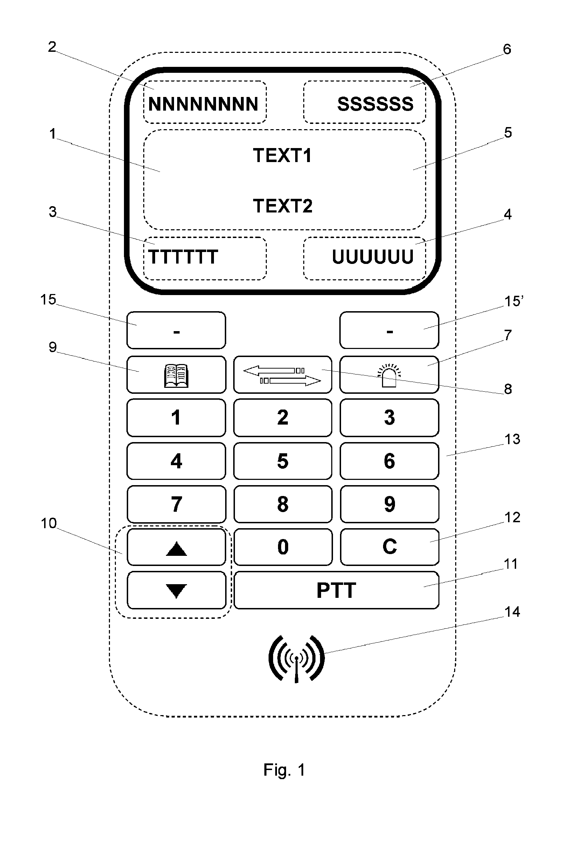

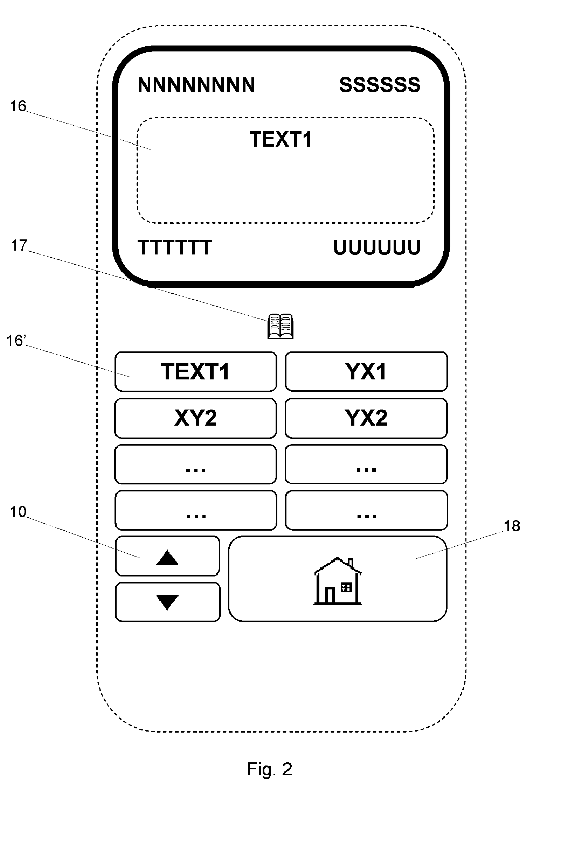

Anhand der beiliegenden Zeichnungen wird die vorliegende Erfindung näher erläutert. Fig. 1 zeigt den Touchscreen eines Bedienterminals im Grundzustand; und Fig. 2 denselben im Kurzwahlmodus.

### Beschreibung der Ausführungsarten

Der Touchscreen im Grundzustand (Fig. 1) entspricht weitgehend den bisher üblichen LCD-Bildschirmen mit Folientastaturen. Es gibt einen Ziffernblock 13, eine Löschtaste 12, eine Eingabetaste 11 und zwei Pfeiltasten 10. Weiters sind zwei Tasten 15, 15' vorgesehen, mit denen Untermenüs aufgerufen werden können. Oben ist ein Informationsanzeigefeld 1 angeordnet, in dem in den oberen Ecken die Benutzernummer 2 und die Statusanzeige 6 (z.B. "READY") angezeigt werden. In den unteren Ecken gibt es zwei Textfelder 3 und 4, in denen zum Beispiel eine mögliche Funktion (z.B. "SENDEN") und die Uhrzeit dargestellt sind. Der restliche Bereich wird durch ein großes Textfeld 5 ausgefüllt, in dem je nach Zusammenhang unterschiedliche Informationen angezeigt werden.

Zusätzlich zu den üblichen Folientastaturen gibt es jedoch Funktionstasten 7, 8 und 9. Durch Drücken einer der Funktionstasten 7, 8 oder 9 gelangt man in jeweils einen anderen Modus: Bei Drücken der Funktionstaste 9 in den Kurzwahlmodus, bei Drücken der Funktionstaste 7 in den Modus "Signalquittierung" und bei Drücken der Funktionstaste 8 in den Modus "Historie und Echtzeitstatus". In jedem dieser Modi kann die Tastatur ein völlig anderes Aussehen haben, weil es sich um eine Bildschirmtastatur handelt. Schließlich ist auch noch ein "RFID"-Symbol 14 vorhanden, das anzeigt, wo sich die RFID-Antenne befindet, d.h. wo der Benutzer seine Karte hinhalten soll.

Der Kurzwahlmodus ist in Fig. 2 dargestellt. Er wird durch ein Telefonbuch-Symbol 17 angezeigt. In diesem Modus kann man durch Drücken der Pfeiltasten 10 die Adressliste im Bereich 16 (ein- bzw. mehrzeilig) durchblättern. Hat man das gewünschte Ziel erreicht, kann man durch bewusst langes Drücken auf eine der frei programmierbaren Tasten 16' den im Bereich 16 angezeigten Text automatisch und font-unabhängig übernehmen. Hierfür ist keine Texteingabe oder Sonstiges notwendig. Langes Drücken bedeutet z.B. eine Zeitspanne von mehr als 5 s. bis maximal 90 s. Bei kürzerem Drucken einer der Tasten, also im Beispiel kürzer als 5 s, erfolgt die automatische Zielwahl durch die Stationsplatine. Durch Drücken einer "Home Taste" 18 gelangt man wieder in den Grundzustand.

Modus "Historie und Echtzeitauswertung": Hier werden die zu empfangenden Sendungen dieser Station angezeigt bzw. die Sendungen, die in der letzten Zeit empfangen oder abgeschickt wurden. Dies bedeutet, dass Sendungen, welche bereits von der Zentrale erfasst sind und zu dieser Station unterwegs sind, angezeigt werden können. Die Anzeige kann Informationen wie Sender, Priorität, Ankunftszeit enthalten. Durch diese wichtigen individuell an der Station abfragbaren Echtzeitinformationen kann der User z.B. eine optimierte Zeit- und Arbeitsplanung durchführen und freie Zeitfenster nutzen, um Berichte abzusenden oder Blutkonserven zu verteilen.

### Liste der Bezugszeichen

- 1: Informationsanzeigefeld
- 2: Benutzernummer
- 3: Textfeld
- 4: Textfeld
- 5: Textfeld
- 6: Statusanzeige
- 7, 8, 9: Funktionstasten
- 10: Pfeiltasten
- 11: Eingabetaste
- 12: Löschtaste
- 13: Ziffernblock
- 14: Symbol RFID-Antenne
- 15, 15': Untermenü
- 16: Bereich
- 16': Kurzwahltasten
- 17: Telefonbuchsymbol
- 18: Home-Taste

## Patentansprüche

1. Rohrpoststation mit einem Bedienterminal zur Eingabe und Ausgabe von Daten, wobei das Bedienterminal einen Touchscreen mit Bildschirmtastatur aufweist, **dadurch gekennzeichnet, dass** die Funktion zumindest einiger Tasten (16') durch eine Eingabe am Bedienterminal geändert werden kann.

2. Rohrpoststation nach Anspruch 1, **dadurch gekennzeichnet, dass** die Funktion zumindest einiger Tasten (16') dadurch geändert werden kann, dass die entsprechende Taste (16') länger als eine vorgegebene Mindestzeit gedrückt wird.

3. Rohrpoststation nach Anspruch 2, **dadurch gekennzeichnet, dass** die entsprechende Taste (16') mit dem Ziel programmiert wird, das gerade in einem Bereich (16) der Anzeige angezeigt wird.

4. Rohrpoststation nach Anspruch 3, **dadurch gekennzeichnet, dass** am Bedienterminal die Historie und/oder die anstehenden Sendungen anzeigbar sind.

5. Rohrpoststation nach einem der Ansprüche 1-4, **dadurch gekennzeichnet, dass** sie eine Identifizierungsvorrichtung für den Benutzer aufweist und dass die Funktion nur dann geändert wird, wenn der identifizierte Benutzer die entsprechende Berechtigung hat.

6. Rohrpoststation nach Anspruch 5, **dadurch gekennzeichnet, dass** eine Platine vorgesehen ist, auf der sowohl die übliche Steuerung für die Rohrpoststation als auch die Ansteuerung des Bedienterminals als auch die Identifizierungsvorrichtung für den Benutzer untergebracht sind.

7. Rohrpoststation nach einem der Ansprüche 1-5, **dadurch gekennzeichnet, dass** die Hintergrundfarbe der Anzeige vom Zustand der Rohrpoststation oder der Rohrpostanlage abhängig ist.
